(19) **Europäisches Patentamt European Patent Office Office européen des brevets**

(11) **EP 1 587 857 B1**

(12) **EUROPEAN PATENT SPECIFICATION**

(45) Date of publication and mention of the grant of the patent:
**28.02.2007 Bulletin 2007/09**

(21) Application number: **04704146.2**

(22) Date of filing: **21.01.2004**

(51) Int Cl.:
*C08J 3/00* (2006.01)   *F16C 33/00* (2006.01)

(86) International application number:
**PCT/US2004/003569**

(87) International publication number:
**WO 2004/065462 (05.08.2004 Gazette 2004/32)**

(54) **MOLDINGS OF LIQUID CRYSTALLINE POLYMER POWDERS**

FORMMASSE AUS FLÜSSIGKRISTALLINEN POLYMERPULVERN

MOULAGES DE POUDRES CRISTALLINES LIQUIDES

(84) Designated Contracting States:
**AT BE BG CH CY CZ DE DK EE ES FI FR GB GR HU IE IT LI LU MC NL PT RO SE SI SK TR**

(30) Priority: **23.01.2003 US 442016 P**
          **16.01.2004 US 758716 P**

(43) Date of publication of application:
**26.10.2005 Bulletin 2005/43**

(73) Proprietor: **E.I. DU PONT DE NEMOURS AND COMPANY**
**Wilmington, DE 19898 (US)**

(72) Inventors:
• **BLOOM, Joy, Sawyer**
  **Wilmington, Delaware 19810 (US)**
• **KANE, Paul**
  **Bloomfield Hills, Michigan 48301 (US)**

• **CHESNA, John, C.**
  **Brunswick, Ohio 44212 (US)**

(74) Representative: **Morf, Jan Stefan**
**Abitz & Partner**
**Patentanwälte**
**Postfach 86 01 09**
**81628 München (DE)**

(56) References cited:
**EP-A- 0 239 036       US-A- 4 835 243**
**US-A- 5 100 605**

• **DATABASE WPI Section Ch, Week 200318 Derwent Publications Ltd., London, GB; Class A23, AN 2003-178704 XP002292207 & JP 2002 330493 A (SUMITOMO CHEM CO LTD) 15 November 2002 (2002-11-15)**

**Description**

FIELD OF THE INVENTION

Thermotropic liquid crystalline polymer powders may be molded, for example by compression molding, under conditions that result in little or no flow of the molten polymer so that the resulting molding has essentially isotropic properties.

TECHNICAL BACKGROUND

Thermotropic liquid crystalline polymers (LCPs) are items of commerce, being used in many applications such as automotive parts, electrical and electronic parts such as connectors, and films. Typically when these polymers are molded and extruded, the polymer is melted and flows into a mold (for instance in injection molding) or through an extrusion die. Because of the anisotropic nature of LCPs the flow induces orientation of the LCP and the resulting parts are anisotropic. When one skilled in the art considers such moldings one typically thinks of differences in properties in the machine and transverse directions, and properties that usually come to mind are tensile and flexural strength, elongation and modulus, and measures of toughness such as notched Izod tests. Many other properties are also affected, an important one being coefficient of thermal expansion (CTE), which varies according to the direction in which it is measured. For electrical and electronic parts on which electrical or electronic parts are mounted on an LCP (or other resin) substrate such as an epoxy resin, the coefficient of thermal expansion of the resin is preferably matched (as closely as possible) to the coefficient of thermal expansion of the electronic or electrical components. Since the electronic or electrical components are not anisotropic, when mounted on an anisotropic LCP part it will be impossible to match the coefficient of thermal expansion of the LCP in two or more directions to that of the electronic or electrical components. Therefore isotropic LCP parts are desirable.

So-called wear parts (parts which must resist abrasion and preferably have a low coefficient of friction) made with thermoplastic including thermotropic LCPs are also known. Typically these have one or more other polymers and/or one or more fillers in the formulation to improve the wear properties. With most thermoplastic wear parts, if the friction load on the wear part is too high, the part usually fails by melting of the thermoplastic. Therefore thermoplastic wear parts that do not fail by melting of the thermoplastic are desired.

Poly(4-hydroxybenzoic acid) has been "impact molded" see for instance U.S. Patent 3,662,052. While many assume this polymer is a liquid crystalline polymer it is not thermotropic, since it melting point is apparently above its decomposition temperature (see U.S. Patent 3,974,250).

Powdered thermotropic LCPs have been used for powder coating, see U.S. Patent 4,394,498. The powder coating process is not included in the process herein since is does not involve placing the resin being processed under pressure.

EP-A-0 239 036 discloses a process for forming articles with isotropic properties from LCPs using injection embossing. The use of compression molding or particles with a size of 1000 micrometers or less is not disclosed.

Wear parts comprising LCPs have been made, for instance such bearings, bushing, thrust washers and gears are commercially available. These parts are anisotropic, and made by common thermoplastic forming processes such as injection molding.

SUMMARY OF THE INVENTION

This invention concerns a process for forming an isotropic thermotropic liquid crystalline part, comprising:

(a) forming a molding composition of a powdered thermotropic liquid crystalline polymer having a particle size of about 1000 μm or less, and optionally

(i) one or more other powdered resins; or
(ii) one or more fillers; or
(iii) one or more other powdered resins and one or more fillers;

(b) placing said molding composition into a mold for compression molding;
(c) applying pressure, and sufficient heat to melt said thermotropic liquid crystalline polymer; and
(d) cooling said mold or molding device to solidify said thermotropic liquid crystalline polymer to form a solid part;

and provided that said solid part is isotropic.

This invention also concerns an apparatus, comprising, an isotropic part which comprises a thermotropic liquid crystalline polymer on which is mounted one or more electric or electronic components.

Also disclosed herein is an improved process for reducing wear between a first part which has a first surface and comprises a thermoplastic, and a second part which has a second surface, wherein said first and second surfaces are in contact with one another and moving with respect to one another, wherein the improvement comprises, said first part comprises a thermotropic liquid crystalline polymer and is isotropic.

DETAILS OF THE INVENTION

Herein thermotropic LCPs are used. By "LCP" is meant a polymer which is anisotropic when tested by the TOT test as described in U.S. Patent No. 4,118,372, which is hereby incorporated by reference. By thermotropic is meant the LCP may be melted and is anisotropic in the melt, as described in the TOT test.

Useful LCPs include those which are described in U.S. Patent Nos. 3,991,013, 3,991,014 4,011,199, 4,048,148, 4,075,262, 4,083,829, 4,118,372, 4,122,070, 4,130,545, 4,153,779, 4,159,365, 4,161,470, 4,169,933, 4,184,996, 4,189,549, 4,219,461, 4, 232, 143, 4,232,144, 4,245,082, 4,256,624, 4,269,965, 4,272,625, 4, 370, 466, 4, 383, 105, 9, 447, 592, 9, 522, 974, 4, 617, 369, 4, 664, 972, 4,684,712, 4,727,129, 4, 727, 131, 4,728,714, 4, 749, 769, 4,762,907, 4, 778, 927, 4, 816, 555, 4, 849, 499, 4, 851, 496, 4,851,497, 4,857,626, 4,864,013, 4,868,278, 4,882,410, 4,923,947, 4,999,416, 5,015,721, 5,015,722, 5,025,082, 5,086,158, 5,102,935, 5, 110, 896, 5,143,956, and 5,710,237, and European Patent Application 356,226. A preferred form of LCP is an aromatic polyester or aromatic poly(ester-amide), especially an aromatic polyester. By an "aromatic" polymer is meant that all of the atoms in the main chain are part of an aromatic ring, or are functional groups connecting those rings such as ester, amide, or ether (the latter of which may have been part of a monomer used). The aromatic rings may be substituted with other groups such as alkyl groups.

By a "resin" herein is meant any polymeric material, synthetic or natural, preferably synthetic, which is stable at the temperature needed for forming the part, and is not a thermotropic LCP. The resin may be a thermoplastic or a thermoset, but is preferably a thermoplastic. Useful resins include polyesters, polyamides, fluoropolymers, phenolic resins, epoxy resins, polyolefins, polyimides, polyetherimides, and polyketones.

By a filler herein is meant any material which may be added to the composition which is not a resin. Fillers include materials which conventionally thought of as inert materials, reinforcing fillers, pigments, etc. Fillers may be organic or inorganic. Typical fillers include minerals such as clay, mica, and talc; glass powder; carbon black (in all forms); $TiO_2$; short glass, aramid and carbon (graphitic and nongraphitic) fibers, fibrils or fibrids.

By a powder herein (except for short fibers, fibrils or fibrids, which are also considered powders, see below) is meant a material with a particle size at 50 volume percent of about 1000 $\mu$m or less, preferably about 100 $\mu$m or less, and more preferably having a mean particle size of about 1 $\mu$m to about 100$\mu$m. Short fibers, fibrils, and fibrids, which are also defined as fillers, have a maximum average diameter of about 25 $\mu$m, preferably 15 $\mu$m, and a maximum average length of about 8.2 mm, preferably about 2.0 mm. By isotropic is meant that the ratio of the CTE in two (perpendicular if possible) directions in the part is about 0.60 to 1.0. This is calculated by measuring the CTEs in two directions (see below for measurement) using ASTM Method D696. The small of these two values is paced into the numerator and the larger is placed in the denominator and the ratio calculated. Preferably this ratio is about 0.70 to 1.0, more preferably about 0.80 to about 1.0, and especially preferably about 0.90 to 1.0.

A typical method of making the parts described herein by the process described herein is by compression molding. In this type of a process a molding composition may be prepared by mixing the ingredients of the molding composition, the LCP powder, resin(s) (if any), and filler (if any) by mixing particles of each (dry blending) to form a reasonably uniform mixture of the ingredients. This molding composition is then added to a mold suitable for use in a compression mold. The mold is then placed in a compression press (or may be in the press when the molding composition is added), the mold is closed and heat and pressure are applied (the pressure need only be applied near or above the melting point of the LCP and other thermoplastic present if the thermoplastic melts at a lower temperature than the LCP). The pressure is applied to remove as many of the voids between the particles as possible to densify the composition into a solid (i.e. preferably few or no voids) part. Typically the pressure applied will be about 170 kPA to about 7 MPa (about 25 to about 1000 psi), more typically about 700 kPa to about 3.5 MPa (about 100 to about 500 psi). Any maximum pressure limitation may be combined with any minimum pressure limitation to form a pressure range. As an aid to densification it may be useful to apply a (partial) vacuum to the mold interior to remove any gases (air) present. The temperature to which the mold is heated is typically at least to the melting point of the LCP, and preferably at least about 20°C above that melting point. Sufficient time under these conditions is allowed so that the LCP is melted throughout the composition being molded, and densification takes place. Compression molding (which is more often used for thermoset polymers, but can be used for thermoplastics as well) is a well know technique see for instance H. Mark, et al., Ed., Encyclopedia of Polymer Science and Engineering, Vol. 4, John Wiley & Sons, New York, 1986, p. 79-108.

During whatever forming process is used it is preferred that the LCP, when molten, flow as little as possible, so that it does not become highly anisotropic, and so is isotropic when tested as described herein.

Preferably the part made will have an apparent density of at least about 75% of the calculated density (based on the calculated density), more preferably at least about 90% of the calculated density, even more preferably at least about 95% of the calculated density, and most preferably at least about 98% of the calculated density. The apparent density is measured by the procedure of ASTM D792. A part which contains voids will have an apparent density lower than its calculated density. By "calculated density" is meant the density of an object, assuming it has no voids or pores, which is calculated from the amounts and densities of the individual materials in that object. For example, if an object was 60 weight percent of a material having a density of 1.4, and 40 weight percent of a material having a density of 1.6, the calculated density of that object would be:

$$d = 1.0/[(0.6/1.4)+(0.4/1.6)] = 1.47$$

Calculations of this type are well known in the art.

Parts made as described above are particularly useful for "stock shapes". Stock shapes are standard pieces which when cut, ground, machined, etc., are made into other shapes without remelting the LCP [or other thermoplastic (s) if present]. Stock shapes include rods of differing cross sections such as rectangular, square and circular; sheets or plaques which are rectangular solids; tubes; and rings. Parts made from these stock shapes have good high temperature resistance (assuming the LCP used has a high melting point), good chemical resistance, good wear resistance (assuming appropriate filler and/or resin is chosen), and good machineability. The parts made are useful in industries such as semiconductors manufacturing, oil production, chemicals manufacturing, clean room operations, and other industrial applications.

Aside from stock shapes, individual parts may also be directly molded. Such useful parts include labyrinth seals, bearing, vacuum pump vanes, hot runner inserts, calendar rolls or roll covers, holographic rolls or roll covers, LCD sputtering holders, valves, valve seals and valve packing, thrust washers, computer chip contactors and nests, and CMP (chemical mechanical planarization) retaining rings. Many of these parts may also be machined from stock shapes.

These isotropic LCP parts are also useful as wear parts. Such wear parts often have resins and/or fillers present. Useful resins and fillers for such wear parts include one or more of graphite, carbon fiber, fluoropolymers, $MoS_2$, clay, a sheet silicate, mica, talc, ZnO, tungsten carbide, a silicone, carbon black, particulate polyimide, boron nitride, aramid fibers, potassium titanate whiskers, barium titanate whiskers, and poly(tetrafluoroethylene) short fibers. Typical total loading of such resins and fillers is about 5 to about 50 weight percent of the entire composition. An Isotropic LCP composition containing these and other materials may be a first wear part whose surface is in contact with the surface of another part, the two surfaces moving with respect to one another, and the first wear part usually does not fail in use by melting of the LCP.

Rather the failure is due to simple wearing away of the LCP containing part. This is very unusual when compared to thermoplastic wear parts in general, including anisotropic LCP containing wear parts. One or both of the wear parts in contact with one another may be isotropic LCP containing parts.

As mentioned above, LCP parts with isotropic properties (as opposed to LCP with anisotropic properties) are particularly valuable for electrical and electronic applications where electrical and electronic components are mounted on a surface of an isotropic LCP. Such components include the electrical conductors for printed circuits, computer chip contactors and nests, and high precision machined plastic components for semiconductor wafer manufacturing. These may be formed or mounted on the LCP surface in conventional ways, such as photolithography (wiring patterns for printed circuits). A particularly useful form for isotropic LCPs is a printed circuit board, either rigid or flexible.

In the Examples, the LCP used had a composition derived from (in molar parts) 100 parts 4,4'-biphenol, 95 parts terephthalic acid, 5 parts isophthalic acid and 200 parts 4-hydroxybenzoic acid. The particle size of the LCP at 50 volume percent was 535 $\mu$m.

In the Examples parts and percentages are by weight unless otherwise indicated. Wear specimens were prepared by machining test blocks of the composition described. A 6.35mm (0.25") wide contact surface of a wear/ friction test block was machined to such a curvature that it conformed to the outer circumference of a 35mm (1.38") diameter X 9.74mm (0.34") wide metal mating ring. The blocks were oven dried and maintained over desiccant until tested.

Wear tests were performed using a Falex No. 1 Ring and Block Wear and Friction Tester. The equipment is described in ASTM Test Method D2714. After weighing, the dry block was mounted against the rotating metal ring and loaded against it with the selected test pressure. Rotational velocity of the ring was set at the desired speed. No lubricant was used between the mating surfaces. The rings were SAE 4620 steel, Rc 58-63, 6-12 RMS. A new ring was used for each test. Test time was 24 h, except when friction and wear were high, in which case the test was terminated early. The friction force was recorded continuously. At the end of the test time, the block was dismounted, weighed and the wear calculated by the following calculation for wear factor:

Wear Factor Calculation:

$$\text{Wear Factor (cc-s/m-kg-hr) = weight loss}$$
$$\text{(grams)/[material density (g/cc) x test duration (h) x}$$
$$\text{load (kg) x velocity (m/s)]}$$

A low number is desired for Wear Factor and a low number or narrow range is desired for the Coefficient of Friction. Coefficient of Friction is preferably <0.20. When a sample is considered to have failed the wear test, melting of the sample has occurred so that the weight loss can't be calculated. In cases where no melting occurred a is considered complete when the micrometer measuring sample wear height reaches a maximum reading.

Particle size was obtained by dividing the sample using a Carpco sample dividing chute (model SS-16-3) to obtain about 1 g of sample which was wetted by 5 drops of 1% Surfynol® GA (a surfactant) and diluted by 20 ml of deionized water and placed in Branson® (Model 5200) ultrasonic bath for 1 min. A Beckman-Coulter Multisizer® Model LS 230 was used for determining particle size distribution. The Multisizer is an electrosensing technique for measuring particle size distribution (PSD) of particulate materials. It is based on measuring changes in electrical resistance that are produced between two electrodes when particles pass through the sensing zone. The particles pass through the zone by being drawn through an aperture under vacuum. Each particle displaces its own volume of electrolyte. The volume displaced is measured as a voltage pulse. The height of each pulse is directly proportional to the volume of the particle. The quantity of electrolyte drawn through the aperture is precisely controlled which allows the system to count and size particles at any exact volume percent.

Example 1

Unfilled LCP powder (about 75 g) was placed into a pan, and allowed to dry at 121°C (250°F) for a minimum of 3 h in a convection oven. The dried material was quickly transferred into a circular mold.

The main part of the mold was a right circular hollow cylinder with an ID of 100 mm (3.93"), OD of 178mm (7") and 100 mm (3.9") tall. Material of construction of the mold was 440C stainless steel. The cylinder was fitted with a press-fit circular base plug, which was inserted through the major length of the cylinder, to prevent material loss during the heating cycle. A type 440C stainless steel ram was fitted to the inside diameter of the cylinder to allow a gap of 0.013mm (0.0005"). The ram was fitted with a Type-J thermocouple, mounted to sense temperature at the base of the ram, which was closest to the material being processed. Prior to use, the mold was coated with a mold release agent.

The mold was then placed into an OEM® (OEM Press Systems, Inc., Orange, CA 92865 USA, type 40T-16x16) 40-ton capacity platen press, which was equipped with capability to evacuate the molding chamber to less than about 33 kPa (absolute) pressure. Heat was applied to the mold via the upper and lower press platens, which were fitted with rod heaters, and controlled individually with Eurotherm® Type 822 (Eurotherm Corp., Reston VA 22090 USA) temperature controllers. The platen set points were adjusted to 415°C (780°F), the vacuum pump was started, and the press was closed, applying 2.6 MPa (377 psi) of force on the mold assembly. The mold assembly was allowed to heat to 393°C (740°F) under this pressure, at a rate of approximately 4.4°C (8°F) per minute. This was the maximum rate of heating possible in this press with this mold. Upon reaching the set-point temperature, a pressure of 35.1 MPa (31 tons) was applied. This was held for 5 min, then the press was opened, and the mold assembly transferred to standard platen press maintained at 10°C (50°F), and a pressure of 35.1 MPa was applied during cooling. After cooling to room temperature, the mold was disassembled, and the product removed. The disc produced was 6.6 mm (0.26") thick, and 99.6mm (3.921") in diameter.

This disk was machined into various test specimens and tested for various physical properties as indicated in Table 1. For CTE "top", "Middle"' and "Bottom" refers to samples removed across the diameter of the disc as one end, in the middle and at the opposite end. The CTE was measured through the thickness (height) of the disc (the "z" direction).

Table 1

| Test | Test Method | Conditions | Results |
|---|---|---|---|
|  |  |  |  |
| Specific Gravity | ASTM D792 | 23°C | 1.389 g/cm$^3$ |
| Moisture Growth | ASTM D570 | 72 h, 60°C | 0.14% |
| Moisture Weight Gain | ASTM D570 | 72 h, 60°C | 0.06% |

(continued)

| Test | Test Method | Conditions | Results |
|---|---|---|---|
| Coefficient of Thermal Expansion | ASTM D696 | 55-160°C | 33.4 $\mu$m/m/°C Top<br>26.4 $\mu$m/m/°C Middle<br>32.3 $\mu$m/m/°C Bottom |
| Coefficient of Thermal Expansion | ASTM D696 | 160-200°C | 39.3 $\mu$m/m/°C Top<br>36.0 $\mu$m/m/°C Middle<br>42.0 $\mu$m/m/°C Bottom |

<u>Example 2</u>

Seventy weight percent of a liquid crystalline polyester powder was dry blended with 10 weight percent of Ucar® graphite (manufactured by GrafTech International, Inc.), 10 weight percent of Zonyl® MP 1200 PTFE (manufactured by E. I. DuPont de Nemours & Co., Inc, Wilmington, DE 19898 USA) and 10 weight percent of Panex® 30MF milled carbon fiber (manufactured by Zoltek Corp., St. Louis, MO 63044, USA). The resulting powder blend was compression molded using the same circular tube used in the previous example.

After loading the dried material (about 300 g) into the mold, the mold assembly was placed into an aluminum carrier, which consisted of an aluminum block 254mm (10") x 254mm (10") x 100mm (3.9") tall. The center portion of the aluminum block was machined with a 178mm (7") diameter hole, to allow the mold assembly to be inserted. The aluminum block was bored on either side of the central hole to allow the insertion of two 1500-watt Watlow® rod heaters (Watlow Controller, Watlow Controls, Winona, MN 55987) per side. These heaters were controlled using Partlow® temperature controllers MIC2000 (The Partlow Corp., New Hartford, NY 13413 USA). Each side was independently controlled. The carrier/mold assembly was then placed in the opening of a Martin Hydraulics 75-ton platen press, with 30.5x30.5 cm (12"x12") platens. No provision for vacuum was present. The platen set points were adjusted to 415°C (780°F), and the press was closed, applying 2.6 MPa (377 psi) of force on the mold assembly. The mold assembly was allowed to heat to 393°C (740°F) under this pressure, at a rate of approximately 6.6°C (12°F) per minute. This heating rate was achieved using the side heaters in the aluminum block, in addition to the heat from the press platens. Upon reaching the ram temperature of 730°F, a pressure of 35.1 MPa (31 tons) was applied. This was held for 5 minutes, then the press was opened, and the mold assembly transferred to standard platen press maintained at 10°C (50°F). Upon cooling to room temperature, the mold was disassembled, and the product removed. The disc (or short tube) produced was 25.4 mm (1") thick, and 99.6mm (3.921") in diameter. The specific gravity of the disc was determined following the ASTM D792 procedure, was found to be 1.534.

The sample was made into test specimens by machining. Wear testing was done at PV (pressure x velocity) as indicated in Table 2.

<u>Example 3</u>

Seventy weight percent of a solid phased polymerized LCP powder was dry blended with 10 weight percent of UCar® graphite, 10 weight percent of Zonyl® MP 1200 PTFE, and 10 weight percent of Panex® 30MF milled carbon fiber.

The resulting powder blend was compression molded using the procedure of Example 2, and then wear test specimens were machined from it. Wear test results are given in Table 2.

Table 2

| Ex .. | PV Limit (MPa-m/s) | PV (MPa-m/s) | Wear Factor (cc-s/m-kg-hr) x 10⁻⁶ | Coefficient of Friction |
|---|---|---|---|---|
|  |  |  |  |  |
| 2 | 4.7 | 1.75 | 53.2 | 0.40 |
| 3 | 5.8 | 1.75 | 42.6 | 0.41 |

In the case of the PV limit, failure was caused by excessive wear rather than being started by melting of the sample.

**Claims**

1. A process for forming an isotropic thermotropic liquid crystalline part, comprising:

    (a) optionally forming a molding composition of a powdered thermotropic liquid crystalline polymer having a particle size of about 1000 μm or less, and optionally

        (i) one or more other powdered resins; or
        (ii) one or more fillers; or
        (iii) one or more other powdered resins and one or more fillers;

    (b) placing said molding composition into a mold for compression molding;
    (c) applying pressure, and sufficient heat to melt said thermotropic liquid crystalline polymer; and
    (d) cooling said mold or molding device to solidify said thermotropic liquid crystalline polymer to form a solid part;

    and provided that said solid part is isotropic.

2. An apparatus, comprising, an isotropic part which comprises a thermotropic liquid crystalline polymer on which is mounted one or more electric or electronic components.

3. An improved process for reducing wear between a first part having a first surface comprising a thermoplastic, and a second part having a second surface, said first and second surfaces being in contact with one another and moving with respect to one another, wherein the improvement comprises, said first part being isotropic and comprising a thermotropic liquid crystalline polymer.

4. An article produced by a process according to Claim 1 or 3 which are labrinyth seals, bearings, vacuum pump vanes, hot runner inserts, rolls, LCD sputtering holders, valves, thrust washers, computer chip contactors and nests or CMP retaining rings or components in semiconductor manufacturing, oil production, or clean room operation.

**Patentansprüche**

1. Verfahren für die Formgebung eines isotropen, thermotropen, flüssigkristallinen Teiles, welches die folgenden Schritte umfasst:

    a) ein wahlweises Formgeben einer für das Formpressen bestimmtem Zusammensetzung aus einem pulverförmigen, thermotropen, flüssigkristallinen Polymer mit einer Partikelgröße von etwa 1000 μm oder weniger, und wahlweise aus

        (i) einem oder mehreren anderen pulverförmigen Harzen; oder
        (ii) einem oder mehreren Füllstoffmitteln; oder
        (iii) einem oder mehreren anderen pulverförmigen Harzen und einem oder mehreren Füllstoffmitteln;

    b) ein Einbringen der für das Formpressen bestimmtem Zusammensetzung in eine Form für das Kompressionspressen;
    c) ein Aufbringen eines Drucks und einer ausreichenden Wärme, um das thermotrope, flüssigkristalline Polymer zum Schmelzen zu bringen; und
    d) ein Kühlen der Form oder der Formpressvorrichtung zum Verfestigen des thermotropen, flüssigkristallinen Polymers, um ein festes Teil zu bilden;

    und unter der Voraussetzung, dass das feste Teil isotrop ist.

2. Vorrichtung, die ein isotropes Teil umfasst, welches ein thermotropes, flüssigkristallines Polymer umfasst, auf welches eine oder mehrere elektrische oder elektronische Komponenten montiert sind.

3. Ein verbessertes Verfahren zur Verminderung des Verschleißes zwischen einem ersten Teil mit einer ersten Oberfläche, welche ein Thermoplast umfasst, und einem zweiten Teil mit einer zweiten Oberfläche, wobei die erste und die zweite Oberflächen miteinander im Kontakt stehen und die eine und die andere sich relativ zueinander bewegen, wobei die Verbesserung umfasst, dass das erste Teil isotrop ist und ein thermotropes, flüssigkristallines Polymer umfasst.

**4.** Gegenstand, welcher durch ein Verfahren gemäß dem Anspruch 1 oder dem Anspruch 3 hergestellt worden ist und welcher besteht aus Labyrinthdichtungen, Lagern, Schaufeln von Vakuumpumpen, Einlegeteilen für beheizte Gusskanäle, Walzen, LCD-Zerstäubungshaltem, Ventilen, Druckscheiben, Computerchipkontaktgebern sowie aus Sätzen von ineinander greifenden Artikeln, oder aus CMP Rückhalteringen oder Komponenten bei der Herstellung von Halbleitern, bei der Ölproduktion oder bei dem Betrieb von Reinräumen.

## Revendications

**1.** Procédé pour former une pièce cristalline liquide isotrope thermotropique comprenant:

(a) former facultativement une composition de moulage d'un polymère cristallin liquide thermotropique en poudre ayant une taille de particule d'environ 1.000 $\mu$m ou moins, et facultativement

(i) une ou plusieurs autres résines en poudre; ou
(ii) une ou plusieurs matières de remplissage; ou
(iii) une ou plusieurs autres résines en poudre et une ou plusieurs matières de remplissage;

(b) placer ladite composition de moulage dans un moule pour le moulage par compression;
(c) appliquer de la pression, et assez de chaleur pour faire fondre ledit polymère cristallin liquide thermotropique; et
(d) refroidir ledit moule ou dispositif de moulage pour solidifier ledit polymère cristallin liquide thermotropique pour former une pièce solide;

et à condition que ladite pièce solide est isotrope

**2.** Dispositif, comprenant, une pièce isotrope qui comprend un polymère cristallin liquide thermotropique sur lequel est monté un ou plusieurs composants électriques ou électroniques.

**3.** Procédé amélioré pour réduire l'usure entre une première pièce ayant une première surface comprenant un thermoplastique, et une seconde pièce ayant une seconde surface, lesdites première et seconde surfaces étant en contact l'une avec l'autre et en mouvement l'une part rapport à l'autre, dans lequel l'amélioration comprend, le fait que ladite première pièce soit isotrope et comprenne un polymère cristallin liquide thermotropique.

**4.** Article produit par un procédé selon les revendications 1 ou 3, qui sont des joints à labyrinthe, des roulements, des palettes de pompes à vide, des inserts de moules d'injection à chaud, des rouleaux, des supports pour pulvérisation par LCD, des valves, des joints à poussée, des puces contacteurs et des nids ou des bagues d'arrêt CMP ou des composants dans la fabrication des semi-conducteurs, la production de pétrole, ou l'opération en salle blanche.